# EUROPEAN PATENT APPLICATION

(11) **EP 4 574 218 A1**
(43) Date of publication of application: **25.06.2025**
(21) Application number: 24192077.6
(22) Date of filing: 31.07.2024
(51) Int. Cl.: A62C 2/06, A62C 3/16, H01M 10/6563, H01M 50/204

(54) **FIRE EXTINGUISHING STRUCTURE OF BATTERY MODULE**

(30) Priority: 21.12.2023 US 202363613394 P; 09.04.2024 CN 202410418328
(71) Applicant: Delta Electronics, Inc., Taoyuan City 33370 (TW)
(72) Inventor: Huang, Jiun-Jie, 32063 Taoyuan City (TW); Lien, Chin, 32063 Taoyuan City (TW); Chan, Chih-Chiang, 32063 Taoyuan City (TW)
(74) Representative: Uexküll & Stolberg

(57) **Abstract**

A fire extinguishing structure of battery module (1) is disclosed and includes a housing (10), a battery pack (20), an airflow guiding channel (30, 31, 32), a fan (40, 40a) and an intumescent insulation layer (50, 51, 52, 53, 54). The accommodation space (13) is in communication between the inlet (11) and the outlet (12). The battery pack (20) is accommodated in the accommodation space. The airflow guiding channel is configured to guide an airflow (F) along an airflow direction from the inlet (11) to the outlet (12). The fan (40, 40a) is configured to generate the airflow (F) flowing to dissipate heat generated by the battery pack (20). The intumescent insulation layer (50, 51, 52, 53, 54) is arranged on a side wall of the airflow guiding channel (30, 31, 32), and configured to react and expand under a reaction temperature to seal the airflow guiding channel. An included angle (α) formed between a normal direction (N) of the intumescent insulation layer (50, 51, 52, 53, 54) and the airflow direction is not less than 90 degrees.

## Description

### FIELD OF THE INVENTION

The present disclosure relates to a battery assembly structure, and more particularly to a fire extinguishing structure of battery module having an intumescent insulation layer correspondingly arranged on a side wall of the airflow guiding channel, for blocking the airflow by expanding the intumescent insulation layer when abnormally heated. The arrangement of the intumescent insulation layer also avoids the possibility of unintended reactions triggered by internal heat sources.

### BACKGROUND OF THE INVENTION

The current electronic cabinets are often equipped with a battery energy storage system (BESS), and the battery energy storage system includes a backup battery unit (Backup Battery Unit, BBU). A conventional data backup battery unit includes battery packs and DC/DC modules. Since the internal components have heat dissipation requirements, a fan is installed at the front end or the rear end of the module, and air vents are disposed at the front wall and the rear wall of the module housing. When the internal components of battery energy storage system undergo a thermal runaway reaction, high-temperature flammable gas and the flames are generated together. The high-temperature flammable gas and accompanying flames may escape through the front vents and the rear vents of the backup battery module. However, the escape of open flames will increase the risk of external combustion of the system and fire in the computer room. According to the safety requirements of battery energy storage system, it is necessary to prevent open flames from escaping when internal components undergo the thermal runaway reaction.

Therefore, there is a need of providing a fire extinguishing structure of battery module having the intumescent insulation layers correspondingly arranged on the side walls of the airflow guiding channel, for blocking the airflow by expanding the intumescent insulation layer when abnormally heated. Moreover, the arrangement of the intumescent insulation layer also avoids the possibility of unintended reactions triggered by internal heat sources, and does not affect the heat dissipation performance of normal airflow, so as to obviate the drawbacks encountered by the prior arts.

### SUMMARY OF THE INVENTION

An object of the present disclosure is to provide a fire extinguishing structure of battery module having the intumescent insulation layers correspondingly arranged on the side walls of the airflow guiding channel, for blocking the airflow by expanding the intumescent insulation layer when abnormally heated. Moreover, the arrangement of the intumescent insulation layer also avoids the possibility of unintended reactions triggered by internal heat sources, and does not affect the heat dissipation performance of normal airflow.

Another object of the present disclosure is to provide a fire extinguishing structure of battery module. Intumescent flame retardant stickers are selected and served as the intumescent insulation layers. Since the initial thickness of the intumescent flame retardant stickers is ranged from 0.51 mm to 0.54 mm, the stickers can be easily attached to the airflow guiding component formed by the air guiding iron parts inside the data backup battery unit. The stickers are symmetrically arranged on the two opposite side walls of the airflow guiding channel, and the heat dissipation performance of normal airflow is not affected. Furthermore, based on the characteristics of the intumescent flame retardant stickers, the material is expanded when exposed to abnormal heat, thereby sealing the airflow guiding channel and preventing flames from escaping. Preferably, the reaction temperature of intumescent flame retardant stickers is ranged from 200°C to 550°C. When the abnormal temperature reaches above 200°C, rapid carbonization will occur and the material layer is expanded to form a protective layer, so that the combustion gases are effectively blocked in a confined space. In addition, as the internal temperature increases, the reactive material of the intumescent flame retardant sticker is expanded more rapidly into a flame retardant layer that is at least thirty times larger. The porous flame retardant layer can achieve good flame retardant effects.

A further object of the present disclosure is to provide a fire extinguishing structure of battery module. The airflow guiding channel formed by the airflow guiding component can smoothly guide the airflow through the interior of the housing, so as to effectively dissipate the heat generated by the battery pack. At the same time, the intumescent insulation layer can be easily attached to the airflow guiding component, and a normal direction of the intumescent insulation layer and the airflow direction is not less than 90 degrees. In this way, the intumescent insulation layer can be attached to the lateral baffles of the airflow guiding component or the central deflector curved plate, so as to face the front end and away from the accommodation space, without affecting the normal airflow in the airflow guiding channel. It prevents heat sources generated by the battery pack or internal components from accidentally triggering the protective mechanism, which is constructed by the intumescent insulation layer. Furthermore, based on the characteristics of the intumescent flame retardant stickers, when it is abnormally heated, it expands and seals the airflow guiding channel adjacent to the inlet, thereby blocking the airflow supply, and effectively exerting the flame retardant effect.

In accordance with an aspect of the present disclosure, a fire extinguishing structure of battery module is provided. The fire extinguishing structure of battery module includes a housing, a battery pack, an airflow guiding channel, a fan and an intumescent insulation layer. The housing includes a first end plane and a second end plane opposite to each other, an inlet, an outlet and an accommodation space. The inlet is disposed on the first end plane, the outlet is disposed on the second end plane, and the accommodation space is in communication between the inlet and the outlet. The battery pack is accommodated within the accommodation space. The airflow guiding channel is in communication between the first end plane and the accommodation space or/and between the second end plane and the accommodation space, and configured to guide an airflow along an airflow direction from the first end plane to the second end plane. The fan is disposed adjacent to the inlet or the outlet, and configured to generate the airflow flowing through the airflow guiding channel and the accommodation space for dissipating heat generated by the battery pack. The intumescent insulation layer is arranged on a side wall of the airflow guiding channel, and configured to react and expand under a reaction temperature to seal the airflow guiding channel, wherein an included angle formed between a normal direction of the intumescent insulation layer and the airflow direction is not less than 90 degrees.

In an embodiment, the intumescent insulation layer includes a pair of intumescent insulation layers, which are respectively disposed on two opposite side walls of the airflow guiding channel, and the included angle formed between the normal direction of the intumescent insulation layer and the airflow direction is equal to 90 degrees.

In an embodiment, the pair of intumescent insulation layers is symmetrically arranged on an upper side wall and a lower side wall of the airflow guiding channel, respectively, or/and symmetrically arranged on a left side wall and a right side wall of the airflow guiding channel.

In an embodiment, the pair of intumescent insulation layers each has an initial thickness, and the airflow guiding channel has an airflow-guiding spacing distance between the two opposite side walls, wherein the airflow-guiding spacing distance is less than or equal to thirty times the initial thickness.

In an embodiment, the intumescent insulation layer is an intumescent flame retardant sticker, and the reaction temperature is ranged from 200°C to 550°C.

In an embodiment, fire extinguishing structure of battery module further includes an airflow guiding component disposed between the first end plane and the accommodation space or/and between the accommodation space and the second end plane, and configured to form the airflow guiding channel in communication between the first end plane and the accommodation space or/and between the accommodation space and the second end plane.

In accordance with an aspect of the present disclosure, a fire extinguishing structure of battery module is provided. The fire extinguishing structure of battery module includes a housing, an airflow guiding component, a battery pack, a fan and an intumescent insulation layer. The housing includes a first end plane and a second end plane opposite to each other, an inlet, an outlet and an accommodation space, wherein the inlet is disposed on the first end plane, the outlet is disposed on the second end plane, and the accommodation space is in communication between the inlet and the outlet. The airflow guiding component is disposed between the first end plane and the accommodation space and configured to form an airflow guiding channel in communication between the first end plane and the accommodation space. The battery pack is accommodated within the accommodation space, and located between the airflow guiding component and the second end plane. The fan is disposed adjacent to the inlet or the outlet, and configured to generate an airflow flowing through the airflow guiding channel and the accommodation space along an airflow direction from the first end plane to the second end plane for dissipating heat generated by the battery pack. The intumescent insulation layer is attached to the airflow guiding component, and configured to react and expand under a reaction temperature to seal the airflow guiding channel, wherein an included angle formed between a normal direction of the intumescent insulation layer and the airflow direction is not less than 90 degrees.

In an embodiment, the airflow guiding component includes a pair of baffles arranged obliquely on inner planes of the housing and extended inwardly, wherein first ends of the pair of baffles are respectively connected to the housing and second ends of the pair of baffles are respectively inclined toward the accommodation space, wherein the pair of baffles each has an outer slope surface and an inner slope surface, the outer slope surface faces the first end plane, the inner slope surface faces the accommodation space, an acute angle is formed by the pair of baffles and the corresponding inner planes of the housing, and the intumescent insulation layer is disposed on the outer slope surface and faces away from the accommodation space, wherein the included angle formed by the normal direction of the intumescent insulation layer and the airflow guiding direction is greater than 90 degrees.

In an embodiment, the airflow guiding component further includes a pair of extension portions correspondingly extended from the second ends of the pair of baffles toward the accommodation space, respectively, wherein an angle formed by the pair of extension portions and the corresponding inner planes of the housing is smaller than the acute angle formed by the pair of baffles and the corresponding inner planes of the housing.

In an embodiment, the airflow guiding component includes a pair of baffles arranged vertically on inner planes of the housing and extended inwardly, wherein the pair of baffles each has an outer surface and an inner surface, the outer surface faces the first end plane, the inner surface faces the accommodation space, and the intumescent insulation layer is disposed on the outer surface and faces away from the accommodation space, wherein the included angle formed by the normal direction of the intumescent insulation layer and the airflow guiding direction is equal to 180 degrees.

In an embodiment, the airflow guiding component includes a curved plate disposed between the pair of baffles and the first end plane, and the curved plate includes a convex surface facing the first end plane and a concave surface facing the pair of baffles and the accommodation space.

In an embodiment, the airflow guiding component includes a pair of baffles and a curved plate, the pair of baffles is arranged vertically on inner planes of the housing and extended inwardly, the pair of baffles each has an outer surface and an inner surface, the outer surface faces the first end plane, the inner surface faces the accommodation space, the curved plate is disposed between the pair of baffles and the first end plane, and the curved plate includes a convex surface facing the first end plane and a concave surface facing the pair of baffles and the accommodation space, wherein the intumescent insulation layer is disposed on the convex surface of the curved plate and faces away from the accommodation space, wherein the included angle formed by the normal direction of the intumescent insulation layer and the airflow guiding direction is equal to 180 degrees.

In an embodiment, the airflow guiding component includes a pair of baffles and a curved plate, the pair of baffles is arranged vertically on inner planes of the housing and extended inwardly, the pair of baffles each has an outer surface and an inner surface, the outer surface faces the first end plane, the inner surface faces the accommodation space, the curved plate is disposed between the pair of baffles and the accommodation space, and the curved plate includes a concave surface facing the pair of baffles and the first end plane and a convex surface facing the accommodation space, wherein the intumescent insulation layer is disposed on the concave surface of the curved plate and faces away from the accommodation space, wherein the included angle formed by the normal direction of the intumescent insulation layer and the airflow guiding direction is equal to 180 degrees.

In an embodiment, the intumescent insulation layer is an intumescent flame retardant sticker, and the reaction temperature is ranged from 200°C to 550°C.

In an embodiment, the intumescent insulation layer has a volume expansion ratio greater than thirty at the reaction temperature.

### BRIEF DESCRIPTION OF THE DRAWINGS

The above contents of the present disclosure will become more readily apparent to those ordinarily skilled in the art after reviewing the following detailed description and accompanying drawings, in which:
FIG. 1 is a schematic cross-sectional view illustrating a fire extinguishing structure of battery module according to a first embodiment of the present disclosure;
FIG. 2 is a schematic cross-sectional view illustrating a fire extinguishing structure of battery module according to a second embodiment of the present disclosure;
FIG. 3 is a schematic cross-sectional view illustrating a fire extinguishing structure of battery module according to a third embodiment of the present disclosure;
FIG. 4 is a schematic cross-sectional view illustrating a fire extinguishing structure of battery module according to a fourth embodiment of the present disclosure;
FIG. 5 is a schematic cross-sectional view illustrating a fire extinguishing structure of battery module according to a fifth embodiment of the present disclosure; and
FIG. 6 is a schematic cross-sectional view illustrating a fire extinguishing structure of battery module according to a sixth embodiment of the present disclosure.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed. Further, spatially relative terms, such as "inner," "outer," "front," "rear," "upper," "lower," "left," "right" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. The apparatus may be otherwise oriented (rotated 90 degrees or at other orientations) and the spatially relative descriptors used herein may likewise be interpreted accordingly. When an element is referred to as being "connected," or "coupled," to another element, it can be directly connected or coupled to the other element or intervening elements may be present. Although the wide numerical ranges and parameters of the present disclosure are approximations, numerical values are set forth in the specific examples as precisely as possible. In addition, although the "first," "second, and the like terms in the claims be used to describe the various elements can be appreciated, these elements should not be limited by these terms, and these elements are described in the respective embodiments are used to express the different reference numerals, these terms are only used to distinguish one element from another element. For example, a first element could be termed a second element, and, similarly, a second element could be termed a first element, without departing from the scope of example embodiments.

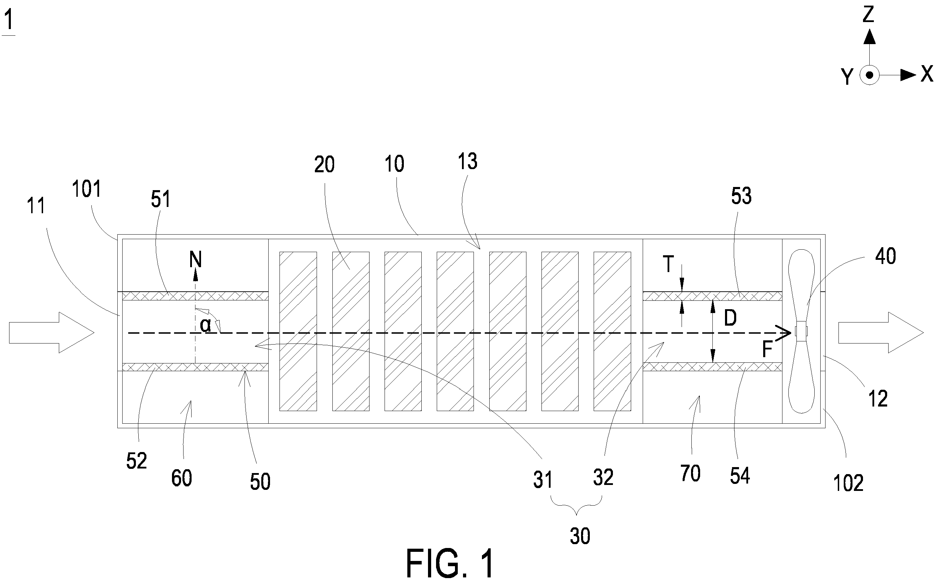

FIG. 1 is a schematic cross-sectional view illustrating a fire extinguishing structure of battery module according to a first embodiment of the present disclosure. In the embodiment, the fire extinguishing structure of battery module 1 is, for example, applied to a backup battery unit, (BBU) in a battery energy storage system (BESS). The fire extinguishing structure of battery module 1 includes a housing 10, a battery pack 20, an airflow guiding channel 30, a fan 40 and an intumescent insulation layer 50. Preferably but not exclusively, the housing 10 is a module housing/chassis, and includes a first end plane 101 and a second end plane 102 opposite to each other, an inlet 11, an outlet 12 and an accommodation space 13. Preferably but not exclusively, the housing 10 is a rectangular parallelepiped, and the first end plane 101 and the second end plane 102 are the front end plane and the rear end plane of the rectangular parallelepiped, respectively. In the embodiment, the inlet 11 is disposed on the first end plane 101, the outlet 12 is disposed on the second end plane 102, and the accommodation space 13 is in communication between the inlet and the outlet. Certainly, the size, the type, the quantity and the arrangement of the inlets 11 and the outlets 12 are adjustable according to the practical requirements, and the present disclosure is not limited thereto. Preferably but not exclusively, the battery pack 20 includes a plurality of battery cells, which are arranged and accommodated within the accommodation space 13. Preferably but not exclusively, the airflow guiding channel 30 includes a front airflow guiding channel 31 in communication between the first end plane 101 and the accommodation space 13, or/and a rear airflow guiding channel 32 in communication between the accommodation space 13 and the second end plane 102, so that an airflow F is guided along an airflow direction (i.e., the X axial direction) from the first end plane 101 to the second end plane 102.

In the embodiment, the fan 40 is embedded within the housing 10 and disposed adjacent to the outlet 12, and configured to generate the airflow F flowing through the airflow guiding channel 30 (including the front airflow guiding channel 31 and the rear airflow guiding channel 32) and the accommodation space 13 for dissipating heat generated by the battery pack 20. Notably, in other embodiments, the fan 40 is disposed adjacent to the inlet 11, between the inlet 11 and the outlet 12, or located in anywhere. All fans capable of generating the airflow F flowing through the airflow guiding channel 30 (e.g., the front airflow guiding channel 31 and the rear airflow guiding channel 32) and the accommodation space 13 for dissipating the heat generated by the battery pack 20, are applicable to the present disclosure. For ease of explanation, the following embodiments only utilize the fan 40 disposed adjacent to the outlet 12 or the inlet 11 for description. The present disclosure is not limited thereto, and not redundantly described herein. In the embodiment, the intumescent insulation layer 50 is arranged on at least one side wall of the airflow guiding channel 30 (e.g., the front airflow guiding channel 31 and the rear airflow guiding channel 32), and configured to react and expand under a reaction temperature to seal the airflow guiding channel (e.g., the front airflow guiding channel 31 and the rear airflow guiding channel 32). In the embodiment, an included angle α formed between a normal direction N of the intumescent insulation layer 50 and the airflow direction (i.e., the X axial direction) is not less than 90 degrees.

In the embodiment, the intumescent insulation layer 50 is arranged in pairs. Preferably but not exclusively, the intumescent insulation layer 50 includes a pair of intumescent insulation layers 51, 52 respectively disposed on two opposite upper and lower side walls of the front airflow guiding channel 31, and a pair of intumescent insulation layers 53, 54 respectively disposed on two opposite upper and lower side walls of the rear airflow guiding channel 32. In that, the normal directions N of the intumescent insulation layers 50, 51, 52, 53, 54 are parallel to the Z axial direction. That is, the included angles α formed between the normal directions N of the intumescent insulation layers 50, 51, 52, 53, 54 and the airflow direction (i.e., the X axial direction) are equal to 90 degrees. In another embodiment, the intumescent insulation layers 50 arranged in pairs are disposed on two opposite left and right side walls of the front airflow guiding channel 31 and the rear airflow guiding channel 32. In that, the normal directions N of the intumescent insulation layers 50 are parallel to the Y axial direction. That is, the included angles α formed between the normal directions N of the intumescent insulation layers 50 and the airflow direction (i.e., the X axial direction) are equal to 90 degrees. In other embodiments, the intumescent insulation layers 50 arranged in pairs are symmetrically disposed on the upper and lower side walls of the airflow guiding channel 30, or/and the left and right side walls of the airflow guiding channel 30. Since the included angles α formed between the normal directions N of the intumescent insulation layers 50 and the airflow direction (i.e., the X axial direction) is not less than 90 degrees, the intumescent insulation layers 50 can be easily attached to any side wall of the airflow guiding channel 30, and the normal airflow F flowing in the airflow guiding channel 30 is not affected. The airflow F generated by the fan 40 can effectively dissipate the heat generated by the battery pack 20.

Preferably but not exclusively, in the embodiment, the intumescent insulation layer 50 is an intumescent flame retardant sticker, and has an initial thickness T ranged from 0.51 mm to 0.54 mm. Preferably but not exclusively, the reaction temperature is ranged from 200°C to 550°C. Intumescent flame retardant stickers are selected and served as the intumescent insulation layers 50. Since the initial thickness of the intumescent flame retardant stickers is ranged from 0.51 mm to 0.54 mm, the stickers can be easily attached to and symmetrically arranged on the two opposite side walls of the airflow guiding channel 30, and the heat dissipation performance of the normal airflow F in the airflow guiding channel 30 is not affected. Furthermore, based on the characteristics of the intumescent flame retardant stickers, the intumescent insulation layers 50 are expanded when exposed to abnormal heat, thereby sealing the airflow guiding channel 30 and preventing flames from escaping. Preferably, the reaction temperature of the intumescent insulation layers 50 is ranged from 200°C to 550°C. When the abnormal temperature reaches above 200°C, rapid carbonization will occur and the intumescent insulation layers 50 is expanded to form a protective layer, so that the combustion gases are effectively blocked in a confined space. In the embodiment, the airflow guiding channel 30 (e.g., the front airflow guiding channel 31 and the rear airflow guiding channel 32) has an airflow-guiding spacing distance D between the two opposite side walls. Preferably but not exclusively, the airflow-guiding spacing distance D is less than or equal to thirty times the initial thickness T. Moreover, the intumescent insulation layer 50 has a volume expansion ratio greater than thirty at the reaction temperature. As the abnormal temperature increases, the reactive material of the intumescent insulation layer 50 is expanded more rapidly into a flame retardant layer that is at least thirty times larger. The porous flame retardant layer can reliably seal the front airflow guiding channel 31 or the rear airflow guiding channel 32 to form a confined space and achieve good flame retardant effects.

Notably, in the embodiment, the airflow guiding channel 30 (e.g., the front airflow guiding channel 31 and the rear airflow guiding channel 32) can be formed by the air guiding iron parts inside the data backup battery unit. In the embodiment, the fire extinguishing structure of battery module 1 further includes an airflow guiding component 60 disposed between the first end plane 101 and the accommodation space 13, and configured to form the front airflow guiding channel 31 in communication between the first end plane 101 and the accommodation space 13. The fire extinguishing structure of battery module 1 further includes an airflow guiding component 70 disposed between the accommodation space 13 and the second end plane 102, and configured to form the rear airflow guiding channel 32 in communication between the accommodation space 13 and the second end plane 102. The airflow guiding components 60, 70 are not limited to being composed of the same or different air guiding iron parts. Certainly, the arrangement of the airflow guiding channel 30 is adjustable according to the practical requirements. In the present disclosure, the intumescent flame retardant stickers are selected and served as the intumescent insulation layer 50, and the installation can be completed without affecting the normal airflow F in the airflow guiding channel 30.

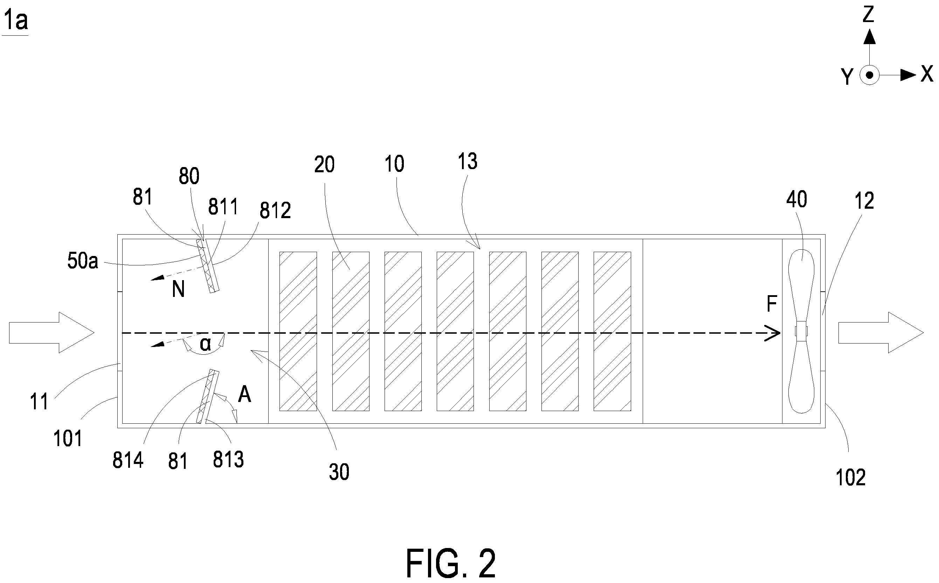

FIG. 2 is a schematic cross-sectional view illustrating a fire extinguishing structure of battery module according to a second embodiment of the present disclosure. In the embodiment, a fire extinguishing structure of battery module 1a applied to a backup battery unit, (BBU) in a battery energy storage system (BESS) is provided. The fire extinguishing structure of battery module 1a includes a housing 10, an airflow guiding component 80, a battery pack 20, a fan 40 and an intumescent insulation layer 50a. The housing 10 includes a first end plane 101 and a second end plane 102 opposite to each other, an inlet 11, an outlet 12 and an accommodation space 13. Preferably but not exclusively, the housing 10 is a rectangular parallelepiped, and the first end plane 101 and the second end plane 102 are the front end plane and the rear end plane of the rectangular parallelepiped, respectively. In the embodiment, the inlet 11 is disposed on the first end plane 101, the outlet 12 is disposed on the second end plane 102, and the accommodation space 13 is in communication between the inlet and the outlet. Certainly, the size, the type, the quantity and the arrangement of the inlets 11 and the outlets 12 are adjustable according to the practical requirements, and the present disclosure is not limited thereto. In the embodiment, the airflow guiding component 80 is disposed between the first end plane 101 and the accommodation space 13, and configured to form an airflow guiding channel 30 in communication between the first end plane 101 and the accommodation space 13. Preferably but not exclusively, the battery pack 20 includes a plurality of battery cells, which are arranged and accommodated within the accommodation space 13, and located between the airflow guiding component 80 and the second end plane 102. The fan 40 is embedded within the housing 10 and disposed adjacent to the outlet 12, and configured to generate an airflow F flowing through the airflow guiding channel 30 and the accommodation space 13 along an airflow direction (i.e., the X axial direction) from the first end plane 101 to the second end plane 102 for efficiently dissipating heat generated by the battery pack 20. Certainly, the fan 40 can be embedded in the housing 10 and disposed adjacent to the inlet 11. The present disclosure is not limited thereto and not redundantly described herein. In the embodiment, the intumescent insulation layer 50a is attached to the airflow guiding component 80, and configured to react and expand under a reaction temperature to seal the airflow guiding channel 30. In the embodiment, an included angle α formed between a normal direction N of the intumescent insulation layer 50a and the airflow direction (i.e., the X axial direction) is not less than 90 degrees. In that, the normal airflow F flowing in the airflow guiding channel 30 is not affected. Moreover, the intumescent insulation layer 50a is configured to react and expand under the abnormal reaction temperature arranged from 200°C to 550°C, to seal the airflow guiding channel 30.

In the embodiment, the airflow guiding component 80 includes a pair of baffles 81 arranged obliquely on inner planes of the housing 10, extended inwardly, and symmetrical to each other. First ends 813 of the pair of baffles 81 are respectively connected to the housing 10, and second ends 814 of the pair of baffles 81 are respectively inclined toward the accommodation space 13. In that, the pair of baffles 81 each has an outer slope surface 811 and an inner slope surface 812. The outer slope surface 811 faces the first end plane 101, the inner slope surface 812 faces the accommodation space 13. In the embodiment, an acute angle A is formed by the pair of baffles 81 and the corresponding inner planes of the housing 10, and a pair of the intumescent insulation layers 50a is disposed on the outer slope surfaces 811 and faces away from the accommodation space 13. In other words, the included angle α formed by the normal direction N of the intumescent insulation layer 50a and the airflow guiding direction (i.e., the X axial direction) is greater than 90 degrees. Preferably but not exclusively, an intumescent flame retardant sticker is selected and served as the intumescent insulation layer 50a, so that the intumescent insulation layer 50a can be easily attached to the outer slope surfaces 811 of the pair of baffles 81 without affecting the normal airflow F in the airflow guiding channel 30. Furthermore, with the arrangement of the intumescent insulation layer 50a facing away the accommodation space 13, it prevents heat sources generated by the battery pack 20 or internal components from accidentally triggering the protective mechanism, which is constructed by the intumescent insulation layer 50a. The intumescent insulation layer 50a only reacts to expand and seal the airflow guiding channel 30 adjacent to the inlet 11 under the abnormal heated temperature above 200°C, thereby blocking the supply of the airflow F, and effectively exerting the flame retardant effect.

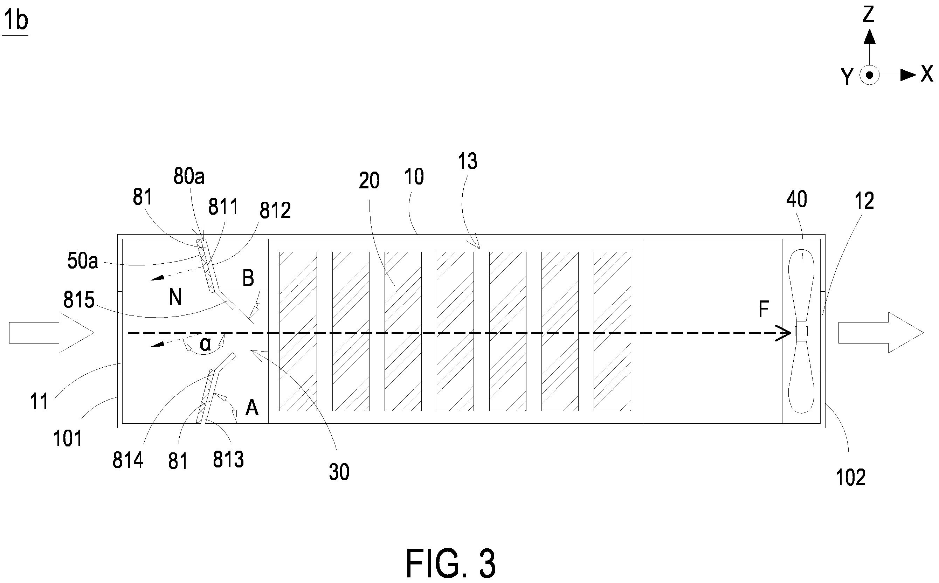

FIG. 3 is a schematic cross-sectional view illustrating a fire extinguishing structure of battery module according to a third embodiment of the present disclosure. In the third embodiment, the structures, elements and functions of the fire extinguishing structure of battery module 1b are similar to those of the fire extinguishing structure of battery module 1a of FIG. 2, and are not redundantly described herein. In the embodiment, the airflow guiding component 80a further includes a pair of extension portions 815 correspondingly extended from the second ends 814 of the pair of baffles 81 toward the accommodation space 13, respectively. Preferably but not exclusively, an angle B formed by the pair of extension portions 815 and the corresponding inner planes of the housing 10 is smaller than the acute angle A formed by the pair of baffles 81 and the corresponding inner planes of the housing 10. With the arrangement of the extension portions 815, it facilitates the airflow guiding channel 30 to further enhance the heat dissipation effect of the airflow F on the battery pack 20 in the accommodation space 13, and the risk of unintended reactions of the intumescent insulation layer 50a triggered by internal heat sources of the battery pack 20 or internal components is further reduced. Certainly, the extension length and the angle range of the extension portions 815 are adjustable according to the practical requirements, and the present disclosure is not limited thereto.

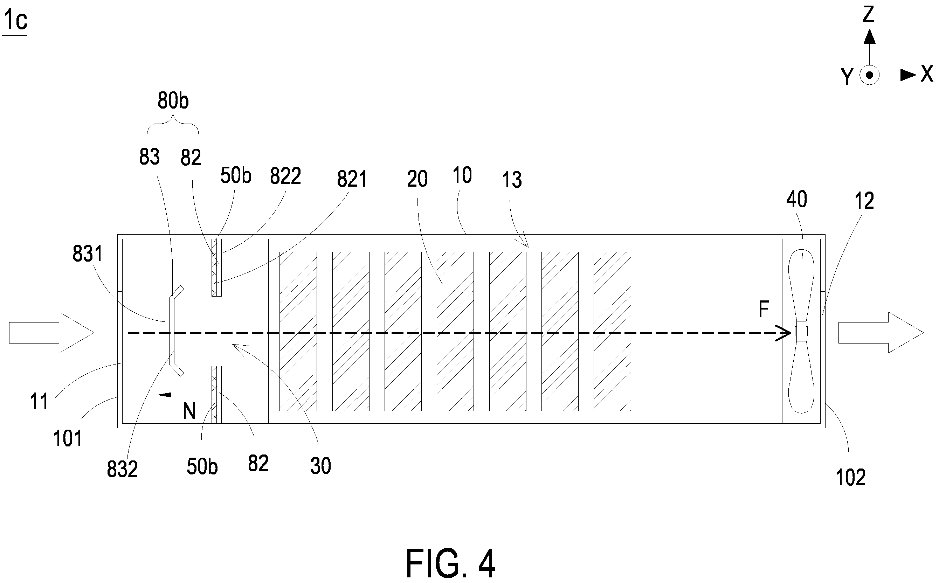

FIG. 4 is a schematic cross-sectional view illustrating a fire extinguishing structure of battery module according to a fourth embodiment of the present disclosure. In the fourth embodiment, the structures, elements and functions of the fire extinguishing structure of battery module 1c are similar to those of the fire extinguishing structure of battery module 1a of FIG. 2, and are not redundantly described herein. In the embodiment, the airflow guiding component 80b, configured to form the airflow guiding channel 30, further includes a pair of baffles 82 arranged vertically on inner planes of the housing 10 and extended inwardly. The baffles 82 arranged in pair are symmetrical to each other, and the pair of baffles 82 each has an outer surface 821 and an inner surface 822. In the embodiment, the outer surface 821 faces the first end plane 101, the inner surface 822 faces the accommodation space 13, and the intumescent insulation layer 50b is disposed on the outer surface 821 and faces away from the accommodation space 13. In that, the included angle α formed by the normal direction N of the intumescent insulation layer 50b and the airflow guiding direction (i.e., the X axial direction) is equal to 180 degrees. Preferably but not exclusively, an intumescent flame retardant sticker is selected and served as the intumescent insulation layer 50b, so that the intumescent insulation layer 50b can be easily attached to the outer surfaces 821 of the baffles 82 arranged in pair without affecting the normal airflow F in the airflow guiding channel 30. Furthermore, with the arrangement of the intumescent insulation layer 50b facing away the accommodation space 13, it prevents heat sources generated by the battery pack 20 or internal components from accidentally triggering the protective mechanism constructed by the intumescent insulation layer 50b. The intumescent insulation layer 50b only reacts to expand and seal the airflow guiding channel 30 adjacent to the inlet 11 under the abnormal heated temperature above 200°C, thereby blocking the supply of the airflow F, and effectively exerting the flame retardant effect.

In the embodiment, the airflow guiding component 80b further includes a curved plate 83 disposed between the pair of baffles 82 and the first end plane 101. The curved plate 83 includes a convex surface 831 facing the first end plane 101 and a concave surface 832 facing the pair of baffles 82 and the accommodation space 13, so as to adjust the airflow F or split flow. In addition, with the arrangement of the curved plate 83, when the intumescent insulation layer 50b are heated abnormally to expand, it facilitates the intumescent insulation layer 50b to fill the space between the pair of baffles 82 and the curved plate 83, thereby sealing the airflow guiding channel 30 adjacent to the inlet 11, blocking the supply of the airflow F, and effectively exerting the flame retardant effect. Certainly, the size and the arrangement of the curved plate 83 are adjustable according to the practical requirements, and the present disclosure is not limited thereto.

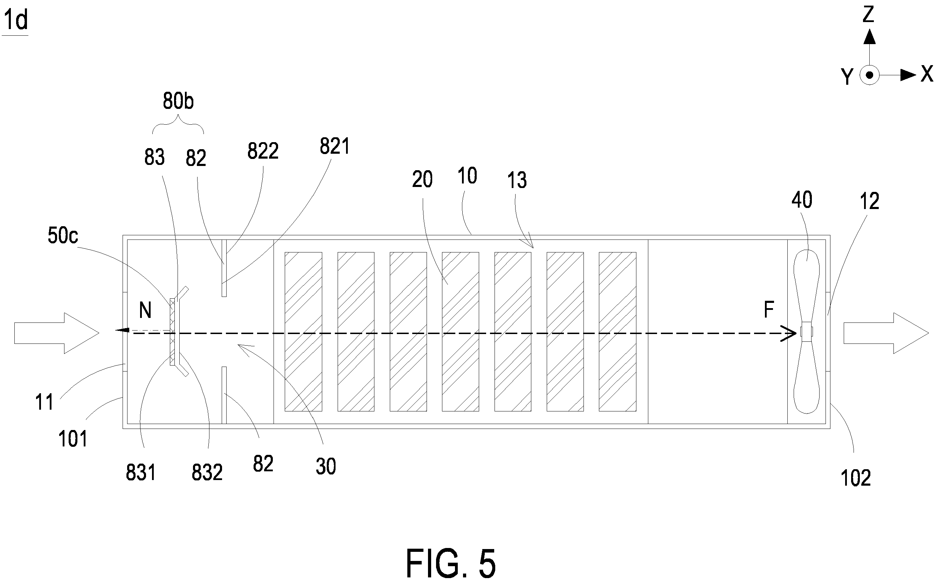

FIG. 5 is a schematic cross-sectional view illustrating a fire extinguishing structure of battery module according to a fifth embodiment of the present disclosure. In the fifth embodiment, the structures, elements and functions of the fire extinguishing structure of battery module 1d are similar to those of the fire extinguishing structure of battery module 1a of FIG. 2, and are not redundantly described herein. In the embodiment, the airflow guiding component 80b configured to form the airflow guiding channel 30 includes a pair of baffles 82 and a curved plate 83. The pair of baffles 82 is arranged vertically on inner planes of the housing 10 and extended inwardly. The pair of baffles 82 each has an outer surface 821 and an inner surface 822. In the embodiment, the outer surface 821 faces the first end plane 101, and the inner surface 822 faces the accommodation space 13. In the embodiment, the curved plate 83 is disposed between the pair of baffles 82 and the first end plane 101. Preferably but not exclusively, the curved plate 83 includes a convex surface 831 facing the first end plane 101 and a concave surface 832 facing the pair of baffles 82 and the accommodation space 13. In the embodiment, the intumescent insulation layer 50c is disposed on the convex surface 831 of the curved plate 83 and faces away from the accommodation space 13. In other words, the included angle α formed by the normal direction N of the intumescent insulation layer 50c and the airflow guiding direction (i.e., the X axial direction) is equal to 180 degrees. Preferably but not exclusively, an intumescent flame retardant sticker is selected and served as the intumescent insulation layer 50c, so that the intumescent insulation layer 50c can be easily attached to the convex surface 831 of the curved plate 83 without affecting the normal airflow F in the airflow guiding channel 30. At the same time, it also prevents heat sources generated by the battery pack 20 or internal components from accidentally triggering the protective mechanism constructed by the intumescent insulation layer 50c. When the intumescent insulation layer 50c is abnormally heated to the reaction temperature range, the intumescent insulation layer 50c reacts to expand and seal the airflow guiding channel 30 adjacent to the inlet 11, thereby sealing the airflow guiding channel 30 adjacent to the inlet 11, blocking the supply of the airflow F, and effectively exerting the flame retardant effect.

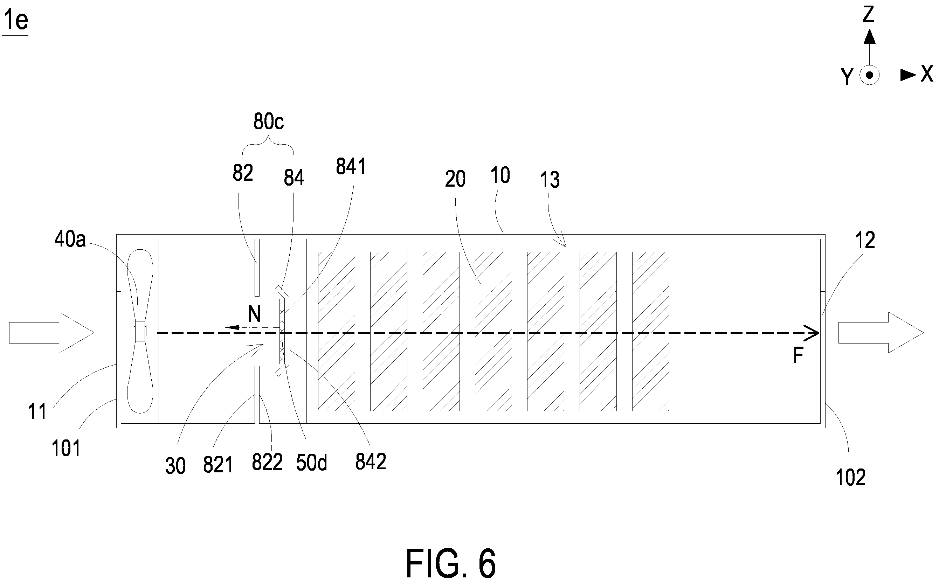

FIG. 6 is a schematic cross-sectional view illustrating a fire extinguishing structure of battery module according to a sixth embodiment of the present disclosure. In the sixth embodiment, the structures, elements and functions of the fire extinguishing structure of battery module 1e are similar to those of the fire extinguishing structure of battery module 1d of FIG. 5, and are not redundantly described herein. In the embodiment, the fan 40a is embedded within the housing 10 and disposed adjacent to the inlet 11, and configured to generate the airflow F. The airflow flows through the airflow guiding channel 30 and the accommodation space 13, and then is discharged through the outlet 12, so as to dissipate the heat generated by the battery pack 20. Certainly, in other embodiments, the fan 40a is disposed adjacent to the outlet 12, between the inlet 11 and the outlet 12, or located in anywhere. All fans capable of generating the airflow F flowing through the airflow guiding channel 30 and the accommodation space 13 are applicable to the present disclosure. Furthermore, in the embodiment, the airflow guiding component 80c configured to form the airflow guiding channel 30 includes a pair of baffles 82 and a curved plate 84. The pair of baffles 82 is arranged vertically on inner planes of the housing 10 and extended inwardly, the pair of baffles 82 each has an outer surface 821 and an inner surface 822, the outer surface 821 faces the first end plane 101, and the inner surface 822 faces the accommodation space 13 and the curved plate 84. Namely, the curved plate 84 is disposed between the pair of baffles 82 and the accommodation space 13 for splitting the airflow F. In the embodiment, the curved plate 84 includes a concave surface 841 facing the pair of baffles 82 and the first end plane 101, and a convex surface 842 facing the accommodation space 13. In the embodiment, the intumescent insulation layer 50d is disposed on the concave surface 841 of the curved plate 84 and faces away from the accommodation space 13. Similarly, the included angle α formed by the normal direction N of the intumescent insulation layer 50d and the airflow guiding direction (i.e., the X axial direction) is equal to 180 degrees. Preferably but not exclusively, an intumescent flame retardant sticker is selected and served as the intumescent insulation layer 50d, so that the intumescent insulation layer 50d can be easily attached to the concave surface 841 of the curved plate 84 without affecting the normal airflow F in the airflow guiding channel 30. At the same time, it also prevents heat sources generated by the battery pack 20 or internal components from accidentally triggering the protective mechanism constructed by the intumescent insulation layer 50d. When the intumescent insulation layer 50d is abnormally heated to the reaction temperature range, it can quickly react and expand to fill between the pair of baffles 82 and the curved plates 84, thereby sealing the airflow guiding channel 30 adjacent to the inlet 11, blocking the supply of the airflow F, and effectively exerting the flame retardant effect.

From the above, in the aforementioned embodiments, the intumescent insulation layers 50, 50a, 50b, 50c, 50d are all disposed adjacent to the side walls of the airflow guiding channel 30. Moreover, the included angle α formed by the normal direction N of each intumescent insulation layer 50, 50a, 50b, 50c and the airflow guiding direction (i.e., the X axial direction) is not less than 90 degrees. It is easy to use intumescent flame retardant stickers to achieve the installation, maintain the smooth airflow F, and solve the problem of accidental triggering of the protective mechanism. Using the intumescent flame retardant stickers to actually test the resistance of the battery system to thermal runaway rection, the intumescent insulation layers 50, 50a, 50b, 50c, 50d provided in the fire extinguishing structure of battery modules 1, 1a, 1b, 1c, 1d can effectively block the airflow guiding channel 30. It prevents the flames from escaping, and a large amount of flammable gas is lost from 11 from the inlet 11.

In summary, the present disclosure provides a fire extinguishing structure of battery module having the intumescent insulation layers correspondingly arranged on the side walls of the airflow guiding channel, for blocking the airflow by expanding the intumescent insulation layer when abnormally heated. Moreover, the arrangement of the intumescent insulation layer also avoids the possibility of unintended reactions triggered by internal heat sources, and does not affect the heat dissipation performance of normal airflow. Intumescent flame retardant stickers are selected and served as the intumescent insulation layers. Since the initial thickness of the intumescent flame retardant stickers is ranged from 0.51 mm to 0.54 mm, the stickers can be easily attached to the airflow guiding component formed by the air guiding iron parts inside the data backup battery unit. The stickers are symmetrically arranged on the two opposite side walls of the airflow guiding channel, and the heat dissipation performance of normal airflow is not affected. Furthermore, based on the characteristics of the intumescent flame retardant stickers, the material is expanded when exposed to abnormal heat, thereby sealing the airflow guiding channel and preventing flames from escaping. Preferably, the reaction temperature of intumescent flame retardant stickers is ranged from 200°C to 550°C. When the abnormal temperature reaches above 200°C, rapid carbonization will occur and the material layer is expanded to form a protective layer, so that the combustion gases are effectively blocked in a confined space. In addition, as the internal temperature increases, the reactive material of the intumescent flame retardant sticker is expanded more rapidly into a flame retardant layer that is at least thirty times larger. The porous flame retardant layer can achieve good flame retardant effects. The airflow guiding channel formed by the airflow guiding component can smoothly guide the airflow through the interior of the housing, so as to effectively dissipate the heat generated by the battery pack. At the same time, the intumescent insulation layer can be easily attached to the airflow guiding component, and a normal direction of the intumescent insulation layer and the airflow direction is not less than 90 degrees. In this way, the intumescent insulation layer can be attached to the lateral baffles of the airflow guiding component or the central deflector curved plate, so as to face the front end and away from the accommodation space, without affecting the normal airflow in the airflow guiding channel. It prevents heat sources generated by the battery pack or internal components from accidentally triggering the protective mechanism, which is constructed by the intumescent insulation layer. Furthermore, based on the characteristics of the intumescent flame retardant stickers, when it is abnormally heated, it expands and seals the airflow guiding channel adjacent to the inlet, thereby blocking the airflow supply, and effectively exerting the flame retardant effect.

## Claims

1. A fire extinguishing structure of battery module (1), **characterized by** comprising:
a housing (10) comprising a first end plane (101) and a second end plane (102) opposite to each other, an inlet (11), an outlet (12) and an accommodation space (13), wherein the inlet (11) is disposed on the first end plane (101), the outlet (12) is disposed on the second end plane (102), and the accommodation space (13) is in communication between the inlet (11) and the outlet (12);
a battery pack (20) accommodated within the accommodation space (13);
an airflow guiding channel (30, 31, 32) in communication between the first end plane (101) and the accommodation space (13) or/and between the second end plane (102) and the accommodation space (13), and configured to guide an airflow (F) along an airflow direction from the first end plane (101) to the second end plane (102);
a fan (40, 40a) disposed adjacent to the inlet (11) or the outlet (12), and configured to generate the airflow (F) flowing through the airflow guiding channel (30, 31, 32) and the accommodation space (13) for dissipating heat generated by the battery pack (20); and
an intumescent insulation layer (50) arranged on a side wall of the airflow guiding channel (30, 31, 32), and configured to react and expand under a reaction temperature to seal the airflow guiding channel (30, 31, 32), wherein an included angle (α) formed between a normal direction (N) of the intumescent insulation layer (50) and the airflow direction is not less than 90 degrees.

2. The fire extinguishing structure of battery module (1) according to claim 1, wherein the intumescent insulation layer (50) includes a pair of intumescent insulation layers (51, 52, 53, 54), which are respectively disposed on two opposite side walls of the airflow guiding channel (30, 31, 32), and the included angle (α) formed between the normal direction (N) of the intumescent insulation layer (50) and the airflow direction is equal to 90 degrees.

3. The fire extinguishing structure of battery module (1) according to claim 2, wherein the pair of intumescent insulation layers (51, 52, 53, 54) is symmetrically arranged on an upper side wall and a lower side wall of the airflow guiding channel (30, 31, 32), respectively, or/and symmetrically arranged on a left side wall and a right side wall of the airflow guiding channel (30, 31, 32).

4. The fire extinguishing structure of battery module (1) according to claim 2, wherein the pair of intumescent insulation layers (51, 52, 53, 54) each has an initial thickness (T), and the airflow guiding channel (30, 31, 32) has an airflow-guiding spacing distance (D) between the two opposite side walls, wherein the airflow-guiding spacing distance (D) is less than or equal to thirty times the initial thickness (T).

5. The fire extinguishing structure of battery module (1) according to claim 1, wherein the intumescent insulation layer (50) is an intumescent flame retardant sticker, and the reaction temperature is ranged from 200°C to 550°C.

6. The fire extinguishing structure of battery module (1) according to claim 1, further comprising an airflow guiding component (60, 70) disposed between the first end plane (101) and the accommodation space (13) or/and between the accommodation space (13) and the second end plane (102), and configured to form the airflow guiding channel (30) in communication between the first end plane (101) and the accommodation space (13) or/and between the accommodation space (13) and the second end plane (102).

7. A fire extinguishing structure of battery module (1a, 1b, 1c, 1d, 1e), **characterized by** comprising:
a housing (10) comprising a first end plane (101) and a second end plane (102) opposite to each other, an inlet (11), an outlet (12) and an accommodation space (13), wherein the inlet (11) is disposed on the first end plane (101), the outlet (12) is disposed on the second end plane (102), and the accommodation space (13) is in communication between the inlet (11) and the outlet (12);
an airflow guiding component (80, 80a, 80b, 80c) disposed between the first end plane (101) and the accommodation space (13) and configured to form an airflow guiding channel (30) in communication between the first end plane (101) and the accommodation space (13);
a battery pack (20) accommodated within the accommodation space (13), and located between the airflow guiding component (80, 80a, 80b, 80c) and the second end plane (102);
a fan (40, 40a) disposed adjacent to the inlet (11) or the outlet (12), and configured to generate an airflow (F) flowing through the airflow guiding channel (30) and the accommodation space (13) along an airflow direction from the first end plane (101) to the second end plane (102) for dissipating heat generated by the battery pack (20); and
an intumescent insulation layer (50a, 50b, 50c, 50d) attached to the airflow guiding component (80, 80a, 80b, 80c), and configured to react and expand under a reaction temperature to seal the airflow guiding channel (30), wherein an included angle (α) formed between a normal direction (N) of the intumescent insulation layer (50a, 50b, 50c, 50d) and the airflow direction is not less than 90 degrees.

8. The fire extinguishing structure of battery module (1a, 1b) according to claim 7, wherein the airflow guiding component (80, 80a) comprises a pair of baffles (81) arranged obliquely on inner planes of the housing (10) and extended inwardly, wherein first ends (813) of the pair of baffles (81) are respectively connected to the housing (10) and second ends (814) of the pair of baffles (81) are respectively inclined toward the accommodation space (13), wherein the pair of baffles (81) each has an outer slope surface (811) and an inner slope surface (812), the outer slope surface (811) faces the first end plane (101), the inner slope surface (812) faces the accommodation space (13), an acute angle (A) is formed by the pair of baffles (81) and the corresponding inner planes of the housing (10), and the intumescent insulation layer (50a) is disposed on the outer slope surface (811) and faces away from the accommodation space (13), wherein the included angle (α) formed by the normal direction (N) of the intumescent insulation layer (50a) and the airflow guiding direction is greater than 90 degrees.

9. The fire extinguishing structure of battery module (1b) according to claim 8, wherein the airflow guiding component (80a) further comprises a pair of extension portions (815) correspondingly extended from the second ends (814) of the pair of baffles (81) toward the accommodation space (13), respectively, wherein an angle (B) formed by the pair of extension portions (815) and the corresponding inner planes of the housing (10) is smaller than the acute angle (A) formed by the pair of baffles (81) and the corresponding inner planes of the housing (10).

10. The fire extinguishing structure of battery module (1c) according to claim 7, wherein the airflow guiding component (80b) comprises a pair of baffles (82) arranged vertically on inner planes of the housing (10) and extended inwardly, wherein the pair of baffles (82) each has an outer surface (821) and an inner surface (822), the outer surface (821) faces the first end plane (101), the inner surface (822) faces the accommodation space (13), and the intumescent insulation layer (50b) is disposed on the outer surface (821) and faces away from the accommodation space (13), wherein the included angle (α) formed by the normal direction (N) of the intumescent insulation layer (50b) and the airflow guiding direction is equal to 180 degrees.

11. The fire extinguishing structure of battery module (1c) according to claim 10, wherein the airflow guiding component (80b) comprises a curved plate (83) disposed between the pair of baffles (82) and the first end plane (101), and the curved plate (83) includes a convex surface (831) facing the first end plane (101) and a concave surface (832) facing the pair of baffles (82) and the accommodation space (13).

12. The fire extinguishing structure of battery module (1d) according to claim 7, wherein the airflow guiding component (80c) comprises a pair of baffles (82) and a curved plate (83), the pair of baffles (82) is arranged vertically on inner planes of the housing (10) and extended inwardly, the pair of baffles (82) each has an outer surface (821) and an inner surface (822), the outer surface (821) faces the first end plane (101), the inner surface (822) faces the accommodation space (13), the curved plate (83) is disposed between the pair of baffles (82) and the first end plane (101), and the curved plate (83) includes a convex surface (831) facing the first end plane (101) and a concave surface (832) facing the pair of baffles (82) and the accommodation space (13), wherein the intumescent insulation layer (50c) is disposed on the convex surface (831) of the curved plate (83) and faces away from the accommodation space (13), wherein the included angle (α) formed by the normal direction (N) of the intumescent insulation layer (50c) and the airflow guiding direction is equal to 180 degrees.

13. The fire extinguishing structure of battery module (1e) according to claim 7, wherein the airflow guiding component (80c) comprises a pair of baffles (82) and a curved plate (84), the pair of baffles (82) is arranged vertically on inner planes of the housing (10) and extended inwardly, the pair of baffles (82) each has an outer surface (821) and an inner surface (822), the outer surface (821) faces the first end plane (101), the inner surface (822) faces the accommodation space (13), the curved plate (84) is disposed between the pair of baffles (82) and the accommodation space (13), and the curved plate (84) includes a concave surface (841) facing the pair of baffles (82) and the first end plane (101) and a convex surface (842) facing the accommodation space (13), wherein the intumescent insulation layer (50d) is disposed on the concave surface (841) of the curved plate (84) and faces away from the accommodation space (13), wherein the included angle (α) formed by the normal direction (N) of the intumescent insulation layer (50d) and the airflow guiding direction is equal to 180 degrees.

14. The fire extinguishing structure of battery module (1a, 1b, 1c, 1d, 1e) according to claim 7, wherein the intumescent insulation layer (50a, 50b, 50c, 50d) is an intumescent flame retardant sticker, and the reaction temperature is ranged from 200°C to 550°C.

15. The fire extinguishing structure of battery module (1a, 1b, 1c, 1d, 1e) according to claim 7, wherein the intumescent insulation layer (50a, 50b, 50c, 50d) has a volume expansion ratio greater than thirty at the reaction temperature.
